# EUROPÄISCHE PATENTANMELDUNG

(11) **EP 2 270 380 A2**
(43) Veröffentlichungstag der Anmeldung: **05.01.2011**
(21) Anmeldenummer: 10167718.5
(22) Anmeldetag: 29.06.2010
(51) Int. Cl.: F16L 19/028, F16L 19/05

(54) **Leitungsanordnung**

(30) Priorität: 30.06.2009 DE 202009009122 U
(71) Anmelder: Senior Berghöfer GmbH, 34121 Kassel (DE)
(72) Erfinder: Freisinger, Dirk, 34119 Kassel (DE); Ahrens, Jan-Hinrich, 37186 Moringen (DE)
(74) Vertreter: Morawski, Birgit

(57) **Zusammenfassung**

Die Erfindung betrifft eine Leitungsanordnung, mit einer Leitung (2) zum Durchleiten eines Fluids; und Kopplungsmitteln (3) zum Koppeln eines Flansches (21) der Leitung (2) mit einem mit der Leitung (2) zu koppelnden Element (4). Erfindungsgemäß ist ein Montageelement (5)vorgesehen, das sich mit einem Abschnitt (51) zwischen den Kopplungsmitteln (3) und dem Flansch (21) erstreckt, wobei ein Drehmoment (B) auf das Montageelement (5) ausgeübt werden kann, um einem Mitdrehen des Montageelementes (5) und somit der Leitung (2) bei einem Drehen der Kopplungsmittel (3) entgegenzuwirken.

## Beschreibung

Die Erfindung betrifft eine Leitungsanordnung gemäß dem Oberbegriff des Anspruchs 1.

Aus dem Stand der Technik sind Leitungsanordnungen mit einer Leitung zum Durchleiten eines Fluids, d.h. eines Gases und/oder einer Flüssigkeit, bekannt, die z. B. über eine Überwurfmutter an ein anderes Leitungselement oder an ein Abschlusselement (z. B. in Form eines Blindflansches) gekoppelt werden können.

Das von der Erfindung zu lösende Problem besteht darin, eine Leitungsanordnung zu schaffen, mit der ein Verspannen der Leitung beim Koppeln mit einem zu koppelnden Element so weit wie möglich vermieden wird.

Dieses Problem wird durch die Leitungsanordnung mit den Merkmalen des Anspruchs 1 gelöst. Weiterbildungen der Erfindung sind in den abhängigen Ansprüchen angegeben.

Danach wird eine Leitungsanordnung bereitgestellt, mit
- einer Leitung zum Durchleiten eines Fluids;
- Kopplungsmitteln zum Koppeln eines Flansches der Leitung mit einem mit der Leitung zu koppelnden Element; sowie
- einem Montageelement, das sich mit einem Abschnitt zwischen den Kopplungsmitteln und dem Flansch der Leitung erstreckt, wobei ein Drehmoment auf das Montageelement ausgeübt werden kann, um einem Mitdrehen des Montageelementes und somit der Leitung bei einem Drehen der Kopplungsmittel entgegenzuwirken.

Insbesondere erstreckt sich das Montageelement so zwischen den Kopplungsmitteln und dem Flansch der Leitung, dass beim Koppeln der Leitung ein Reibkontakt zwischen den Kopplungsmitteln und dem Montageelement entsteht. Dieser Reibkontakt würde dazu führen, dass ein Drehen der Kopplungsmittel ein Drehmoment auf das Montageelement und damit ein Verdrehen des Montageelementes sowie der über den Flansch in Reibkontakt mit dem Montageelement stehenden Leitung zur Folge hätte. Auf das Montageelement kann jedoch ein Gegendrehmoment ausgeübt werden, um seinem Verdrehen bei Drehen der Kopplungsmittel entgegenzuwirken. Beispielsweise kann das Gegendrehmoment mittels eines Werkzeuges (z. B. einem Schlüssel) auf das Montageelement ausgeübt werden.

Durch Ausüben des Gegendrehmomentes auf das Montageelement wird, wie erwähnt, verhindert, dass sich der Flansch der Leitung und damit die Leitung selber verdreht. Dadurch kann insbesondere eine Verspannung der Leitung beim Koppeln mit dem zu koppelnden Element vermieden werden. Dadurch, dass das Gegendrehmoment auf das Montageelement und nicht unmittelbar auf die Leitung ausgeübt wird, kann einem Verdrehen der Leitung effektiv entgegengewirkt und insbesondere eine Beschädigung der Leitung bei Ansetzen eines Werkzeugs vermieden werden.

Das "zu koppelnde Element", mit dem die Leitung über den Leitungsflansch gekoppelt werden soll, ist insbesondere ein Leitungs- oder Abschlusselement, z. B. in Form einer weiteren Leitung (etwa eines identischen Durchmessers), eines Rohransatzes (z.B. eines Ventils), eines Blindflansches oder eines sonstigen Ansatzes, der z. B. ein Außengewinde aufweisen kann.

Das Montageelement erstreckt insbesondere nicht komplett zwischen dem Kopplungsmittel und dem Flansch, sondern z. B. nur abschnittsweise, wobei natürlich auch möglich ist, dass sich das Montageelement nur über einen Teilabschnitt des Flansches erstreckt.

Der Flansch der Leitung ist beispielsweise in Form eines Randes ausgebildet, der sich zumindest abschnittsweise um eine Öffnung in einem Ende der Leitung herum erstreckt. Insbesondere steht der Rand im Wesentlichen senkrecht von einer Seitenwand der Leitung ab. Eine Möglichkeit, einen derartigen Flansch auszubilden, besteht darin, einen Seitenrand der Leitung umzubiegen, d. h. den Flansch in Form eines Bördels auszubilden. Beispielsweise kann der Rand auch mehrfach umgebogen werden, so dass der Flansch beispielsweise in Form eines Doppelbördels ausgebildet sein kann.

Die Kopplungsmittel weisen insbesondere eine Überwurfmutter auf, wobei diese eine im Prinzip beliebige Form haben kann, die insbesondere der Geometrie der Leitung angepasst ist. Beispielsweise hintergreift die Überwurfmutter mit einem Randabschnitt den Flansch der Leitung und einen Abschnitt des Montageelementes, so dass ein Abrutschen der Überwurfmutter über das Ende der Leitung verhindert wird. Zum Koppeln der Leitung weist die Überwurfmutter insbesondere ein Innengewinde auf, über das sie auf ein Gewinde des mit der Leitung zu koppelnden Elementes aufgeschraubt wird. Dadurch wird der Randabschnitt der Überwurfmutter auf den Abschnitt des Montageelementes zu bewegt, bis der Flansch der Leitung über den Abschnitt des Montagelementes gegen einen Abschnitt (z.B. in Form eines Flansches) des zu koppelnden Elementes gedrückt wird.

In einer anderen Variante der Erfindung ist die Leitung rohrförmig oder schlauchförmig (d.h. flexibel) ausgebildet, beispielsweise hohlzylindrisch. Insbesondere kann die Leitung in Form eines Wellschlauches (z. B. aus Metall) ausgebildet sein.

Das Montageelement ist darüber hinaus insbesondere korrespondierend zur Form der Leitung ausgebildet, beispielsweise rotationssymmetrisch (z. B. zumindest abschnittsweise hohlzylindrisch). Allerdings ist die Erfindung selbstverständlich nicht auf eine rotationssymmetrische Ausführung des Montageelementes beschränkt.

Darüber hinaus kann der Abschnitt des Montageelementes, der sich zwischen den Kopplungsmitteln und dem Flansch der Leitung erstreckt, ebenfalls flanschartig ausgebildet sein, d. h. insbesondere in Form einer Auskragung, die um ein Ende des Montageelementes herum verläuft.

In einer anderen Weiterbildung der Erfindung weist das Montageelement eine Struktur auf, über die das Drehmoment ausgeübt werden kann, um einem Mitdrehen des Montageelementes bei einem Drehen der Kopplungsmittel entgegenzuwirken. Beispielsweise umfasst diese Struktur zwei einander gegenüberliegende und im Wesentlichen parallel zueinander verlaufende, im Wesentlichen plane Flächen zum Ansetzen eines Werkzeuges, z. B. eines Schraubschlüssels oder einer Zange. Es ist auch denkbar, dass zwar zwei sich einander gegenüberliegende Flächen zum Ansetzen eines Werkzeuges vorhanden sind, die jedoch unter einem Winkel und nicht parallel zueinander verlaufen. Selbstverständlich kann die Struktur auch mehr als zwei Flächen zum Ansetzen eines Werkzeuges aufweisen.

Das Montageelement weist des weiteren insbesondere eine größere Steifigkeit (z. B. Biegesteifigkeit oder Torsionsteifigkeit) auf als die Leitung, d. h. insbesondere ist die Steifigkeit des Montageelementes größer als die einer Seitenwand (insbesondere im Endbereich) der Leitung, so dass das Ausüben des Gegendrehmomentes, d.h. das Gegenhalten beim Anziehen der Kopplungsmittel, über das Montageelement auf effizientere Weise möglich ist und, wie oben bereits erwähnt, durch das Montageelement insbesondere eine Beschädigung der Leitung durch Ansetzen des Werkzeuges vermieden werden kann. Beispielsweise ist das Montageelement zumindest teilweise aus einem Metall oder einem Kunststoff gebildet. Das Montageelement und der Endbereich der Leitung können jedoch auch aus dem gleichen Material ausgebildet sein, wobei unterschiedliche Steifigkeiten z. B. über unterschiedliche Wandstärken des Montageelementes und der Leitung verwirklicht werden.

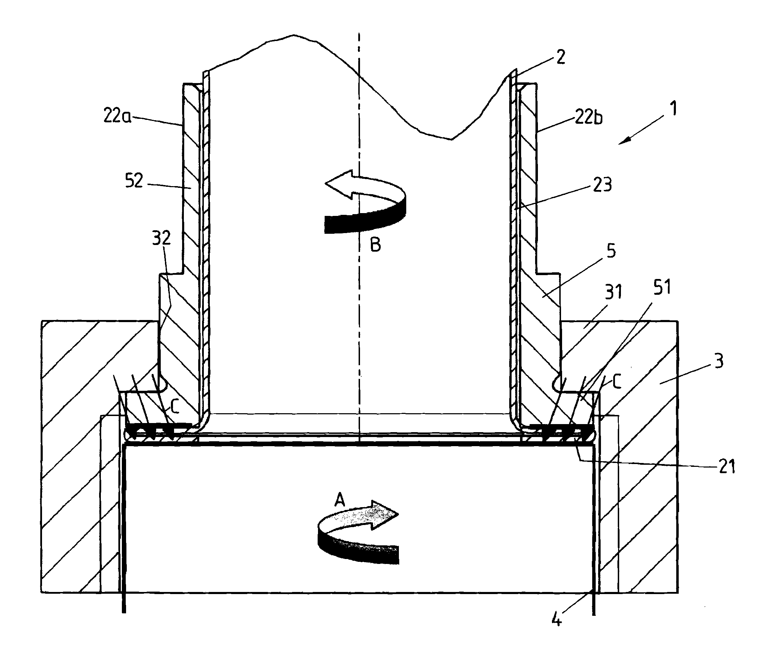

Die Erfindung wird im Folgenden anhand eines Ausführungsbeispiels unter Bezugnahme auf die Figur näher erläutert.

Die Figur zeigt eine erfindungsgemäße Leitungsanordnung 1, die eine Leitung 2 zum Durchleiten eines Fluids, d. h. einer Flüssigkeit und/oder eines Gases, aufweist, die zumindest in ihrem dargestellten Endbereich 23 hohlzylindrisch ausgebildet ist. Des Weiteren weist die Leitungsanordnung 1 Kopplungsmittel in Form einer Überwurfmutter 3 auf, die eine Öffnung 32 aufweist, durch die der Endbereich der Leitung 2 hindurchgreift. Über die Überwurfmutter ist die Leitung 2 mit einem zu koppelnden Element 4 (hier in Form eines Gewindestutzens) gekoppelt.

Darüber hinaus umfasst die Leitungsanordnung ein Montageelement 5 mit einem im Wesentlichen hohlzylindrischen Abschnitt 52, der den Endbereich 23 der Leitung 2 umgibt. An einem dem Gewindestutzen 4 zugewandten Ende weist das Montagelement einen Abschnitt in Form einer Auskragung 51 auf, die sich zwischen einem als Doppelbördel 21 ausgebildeten Flansch der Leitung 2 und einem Rand 31 der Überwurfmutter 3, der die Öffnung 32 umgibt, erstreckt. Der Rand 31 der Überwurfmutter 3 hintergreift also die Auskragung 51 des Montageelementes und das Doppelbördel 21 der Leitung.

Zum Koppeln des Endbereiches der Leitung 2, die insbesondere in Form eines Wellschlauches ausgebildet ist, wird die Überwurfmutter 3 auf das Außengewinde des Gewindestutzens 4 aufgeschraubt. Dadurch kommt eine dem Gewindestutzen 4 zugewandte Seite des Randes 31 mit der Auskragung 51 des Montagelementes 5 in Kontakt und drückt diesen auf das Doppelbördel 21 und diesen somit gegen einen Abschnitt des Gewindestutzens 4 (angedeutet durch Pfeile C).

Dadurch dass die Überwurfmutter 3 zum Koppeln der Leitung 2 mit dem Gewindestutzen 4 auf diesen aufgeschraubt wird, entsteht aufgrund des Reibschlusses zwischen dem Rand 31 und der Auskragung 51 des Montageelementes 5 ein Drehmoment auf das Montageelement 5 (angedeutet durch den Pfeil A). Auf das Montageelement 5 kann jedoch insbesondere durch Verwendung eines Werkzeugs ein Gegendrehmoment B ausgeübt werden, so dass das Montageelement 5 beim Aufschrauben der Überwurfmutter im Wesentlichen in Ruhe bleibt und somit auch ein Verdrehen des zu koppelnden Endes der Leitung 2 vermieden bzw. einem solchen Verdrehen zumindest entgegengewirkt wird. Mit anderen Worten kann das Montageelement so festgehalten werden, dass über den Kontakt zwischen der Auskragung 51 und dem Doppelbördel 21 kein Drehmoment an die Leitung 2 weitergegeben wird.

Zum Ausüben des Gegendrehmomentes auf das Montageelements 5 weist dieses eine Struktur in Form zweier einander gegenüberliegender, sich entlang der Längsrichtung des zu koppelnden Endes 23 der Leitung 2 erstreckender Flächen 22a, 22b auf, die zum Ansetzen eines Werkzeugs, insbesondere eines Schraubschlüssels dienen. Eine derartige Struktur zum Ansetzen eines Werkzeuges ist jedoch nicht zwingend erforderlich, beispielsweise kann das Montageelement auch durchgehend hohlzylindrisch ausgebildet sein, wobei das Gegendrehmoment auf die zylindrische Mantelfläche ausgeübt wird, z. B. durch Ansetzen einer Zange.

In dem gezeigten Beispiel ist die Wandstärke des hohlzylindrischen Abschnitts 52 des Montageelementes größer als die Wandstärke des Leitungsendes 23. Dadurch besitzt das Montageelement 5 eine größere Steifigkeit als das zu koppelnde Ende 23 der Leitung 2 und ermöglicht so ein Ausüben eines Gegendrehmomentes, ohne dass ein Eindrücken oder Verbiegen oder eine sonstige Beschädigung der Leitung 2 auftritt. Allerdings ist nicht zwingend, dass das Montageelement und die Leitung unterschiedliche Wandstärken aufweisen. Es ist auch denkbar, dass unterschiedliche Steifigkeiten der Leitung und des Montageelementes durch Verwendung unterschiedlicher Materialien für das Montageelement und die Leitung realisiert werden.

Die in der Figur dargestellte Leitung 2 ist zumindest abschnittsweise hohlzylindrisch ausgebildet, wobei auch der Fall umfasst ist, dass sie als Wellschlauch, d. h. mit einem wellenartigen Mantelprofil, ausgebildet ist. Das zu koppelnde Ende eines derartigen Wellschlauches kann jedoch mit einer glatten Mantelfläche versehen sein. Es wird in diesem Zusammenhang darauf hingewiesen, dass eine hohlzylindrische Ausgestaltung der Leitung nicht unbedingt notwendig ist. Beispielsweise könnte die Leitung auch einen rechteckigen Querschnitt aufweisen, wobei der innere Querschnitt des Montageelementes entsprechend ausgebildet ist, z. B. ebenfalls rechteckig. Die äußere Kontur des Montageelementes könnte jedoch z. B. kreisförmig sein, um die Verwendung einer Überwurfmutter als Koppelmittel zu ermöglichen.

### Bezugszeichenliste

- 1: Leitungsanordnung
- 2: Leitung
- 3: Überwurfmutter
- 4: Gewindestutzen
- 5: Montageelement
- 21: Doppelbördel
- 22a, 22b: Fläche
- 23: Ende
- 31: Rand
- 32: Öffnung
- 51: Auskragung
- 52: Abschnitt

## Patentansprüche

1. Leitungsanordnung, mit
- einer Leitung (2) zum Durchleiten eines Fluids; und
- Kopplungsmitteln (3) zum Koppeln eines Flansches (21) der Leitung (2) mit einem mit der Leitung (2) zu koppelnden Element (4),
**gekennzeichnet durch**
ein Montageelement (5), das sich mit einem Abschnitt (51) zwischen den Kopplungsmitteln (3) und dem Flansch (21) erstreckt, wobei ein Drehmoment (B) auf das Montageelement (5) ausgeübt werden kann, um einem Mitdrehen des Montageelementes (5) und somit der Leitung (2) bei einem Drehen der Kopplungsmittel (3) entgegenzuwirken.

2. Leitungsanordnung nach Anspruch 1, **dadurch gekennzeichnet, dass** der Flansch (21) in Form eines Randes ausgebildet ist, der sich zumindest abschnittsweise um eine Öffnung in einem Ende der Leitung herum erstreckt und / oder dass der Flansch (21) in Form eines Bördels ausgebildet ist.

3. Leitungsanordnung nach Anspruch 1 oder 2, **dadurch gekennzeichnet, dass** die Kopplungsmittel (3) eine Überwurfmutter umfassen.

4. Leitungsanordnung nach Anspruch 3, **dadurch gekennzeichnet, dass** die Überwurfmutter mit einem Abschnitt (31) den Flansch (21) der Leitung (2) hintergreift und der Abschnitt (51) des Montageelementes, der sich zwischen den Kopplungsmitteln und dem Flansch erstreckt, zwischen diesem Abschnitt der Überwurfmutter und dem Flansch verläuft.

5. Leitungsanordnung nach einem der vorhergehenden Ansprüche, **dadurch gekennzeichnet, dass** die Leitung (2) im Wesentlichen rohr- oder schlauchförmig und / oder hohlzylindrisch und / oder in Form eines Wellschlauches ausgebildet ist.

6. Leitungsanordnung nach einem der vorhergehenden Ansprüche, **dadurch gekennzeichnet, dass** die Leitung (2) aus Metall gebildet ist.

7. Leitungsanordnung nach einem der vorhergehenden Ansprüche, **dadurch gekennzeichnet, dass** das Montageelement (5) rotationssymmetrisch ausgebildet ist.

8. Leitungsanordnung nach einem der vorhergehenden Ansprüche, **dadurch gekennzeichnet, dass** das Montageelement (5) einen Flanschabschnitt aufweist, der sich zwischen den Kopplungsmitteln (3) und dem Flansch (21) der Leitung (2) erstreckt.

9. Leitungsanordnung nach einem der vorhergehenden Ansprüche, **dadurch gekennzeichnet, dass** das Montageelement (5) an einem Ende eine Auskragung aufweist, die sich zwischen den Kopplungsmitteln (3) und dem Flansch (21) der Leitung (2) erstreckt.

10. Leitungsanordnung nach einem der vorhergehenden Ansprüche, **dadurch gekennzeichnet, dass** das Montageelement (5) eine Struktur aufweist, über die das Drehmoment auf das Montageelement (5) ausgeübt werden kann, um einem Mitdrehen des Montageelementes (5) bei Drehen der Kopplungsmittel (3) entgegenzuwirken.

11. Leitungsanordnung nach Anspruch 10, **dadurch gekennzeichnet, dass** die Struktur mindestens eine Fläche zum Ansetzen eines Werkzeuges umfasst.

12. Leitungsanordnung nach Anspruch 11, **dadurch gekennzeichnet, dass** die Struktur zwei einander gegenüberliegende Flächen (22a, 22b) umfasst.

13. Leitungsanordnung nach Anspruch 12, **dadurch gekennzeichnet, dass** die Flächen (22a, 22b) im Wesentlichen parallel zueinander verlaufen.

14. Leitungsanordnung nach einem der vorhergehenden Ansprüche, **dadurch gekennzeichnet, dass** das Montageelement (5) eine größere Steifigkeit aufweist als die Leitung.

15. Leitungsanordnung nach einem der vorhergehenden Ansprüche, **dadurch gekennzeichnet, dass** das Montageelement (5) aus einem Metall oder einem Kunststoff gebildet ist.
